# EUROPÄISCHE PATENTSCHRIFT

(11) **EP 0 330 967 B1**
(45) Date of publication and mention of the grant of the patent: **06.04.1994**
(21) Application number: 89102963.9
(22) Date of filing: 21.02.1989
(51) Int. Cl.: C09B 29/085, C09B 67/22, D06P 1/18

(54) **Process for dyeing synthetic fibrous materials**
Verfahren zum Färben von synthetischen Fasermaterialien
Procédé de teinture de matières fibreuses synthétiques

(30) Priority: 26.02.1988 DE 19883806072
(43) Date of publication of application: 06.09.1989
(73) Proprietor: BAYER AG, D-51368 Leverkusen (DE)
(72) Inventor: Petersen, Lothar, D-5000 Köln 80 (DE); Leverenz, Klaus, Dr., D-5090 Leverkusen 1 (DE); Jordan, Heinz Dietrich, Dr., D-5090 Leverkusen 1 (DE); Sagner, Klaus-Peter, D-5090 Leverkusen 1 (DE)

(56) References cited:
- DE-1 719 077
- DE-3 636 526
- CHEMICAL ABSTRACTS, Band 100, Nr. 14, April 1984, Seite 86, Zusammenfassung Nr. 105089x, Columbus, Ohio, US; & JP-A-58 160 356 (SUMITOMO CHEMICAL CO., LTD) 22-09-1983
- CHEMICAL ABSTRACTS, Band 103, Nr. 8, August 1987, Seite 86, Zusammenfassung Nr. 55583t, Columbus, Ohio, US; & JP-A-60 31 565 (MITSUBISHI CHEMICAL INDUSTRIES CO., LTD) 18-02-1985

## Description

Gegenstand der Erfindung ist ein Verfahren zum Färben und Bedrucken von synthetischen Fasermaterialien.

Das Verfahren ist dadurch gekennzeichnet, daß man Azoverbindungen der Formel 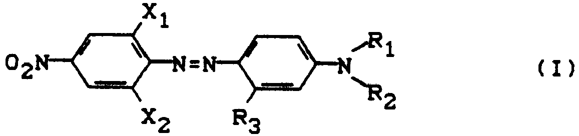 verwendet,
worin - unabhängig voneinander -
X₁ / X₂ = Cl oder Br,
R₁ = C₁-C₄-Alkyl,
R₂ = C₁-C₄-Alkyl, Phenyl-C₁-C₃-alkyl oder -CH₂CH₂OCOC₁-C₄-Alkyl, und
R₃ = NHCO-C₁-C₄-Alkyl oder Methyl bedeuten, mit der Maßgabe, daß
R₂ = CH₂ CH₂ OCOC₁-C₄-Alkyl, wenn
R₃ = Methyl.

Besonders geeignete Alkylreste sind Methyl, Ethyl, n- und i-Propyl sowie n-Butyl.

Vorzugsweise ist X₁ = X₂ = Br.

Die Verbindungen der Formel (I) sind z.T. bekannt (vgl. US-A 3 962 209) bzw. nach an sich bekannten Verfahren leicht zugänglich, indem man p-Nitroanilin in mineralsaurem Medium dihalogeniert, das erhaltene 2,6-Dihalogen-4-nitroanilin diazotiert und auf entsprechende Aniline kuppelt.

Die Azoverbindungen (I) wurden jedoch bislang lediglich als Ausgangsmaterialien zur Herstellung von blauen 2,6-Dicyanoazofarbstoffen verwendet (vgl. o.g. US-Patentschrift).

Es wurde nun gefunden, daß sich diese Verbindungen auch sehr gut zum Färben von synthetischen, hydrophoben Fasermaterialien nach üblichen Methoden eignen, wie z.B. Carrier-, HT- und Thermosolverfahren, eignen.

Bevorzugte Fasermaterialien sind Celluloseester und vor allem aromatische Polyester, sowie deren Mischungen mit Cellulosefasern oder Wolle.

Ausgewählte Verbindungen der Formel I eignen sich auch für den textilen und nicht-textilen Sublimationstransferdruck.

Die Farbstoffe sind sehr preiswert und ergeben auf den genannten Fasermaterialien kräftige rubinrote bzw. gelbbraune Färbungen.

Sie zeichnen sich bei mittlerem bis gutem Echtheitsniveau gegenüber handelsüblichen Farbstoffen dieser Nuancen durch ihre pH-Stabilität aus.

Hervorzuheben ist die Eignung der erfindungsgemäß zu verwendenden Farbstoffe für Marineblau- und Schwarzmischungen.

Geeignete Mischungskomponenten sind beispielsweise u.a.

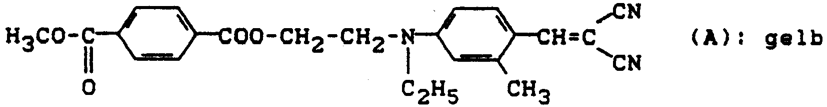

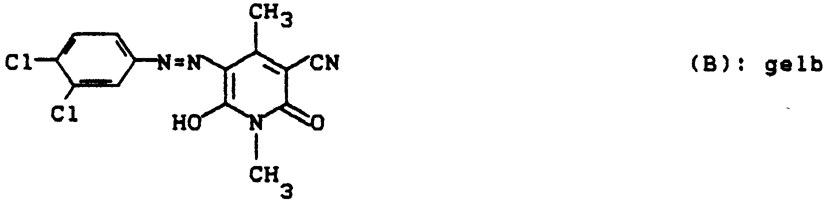

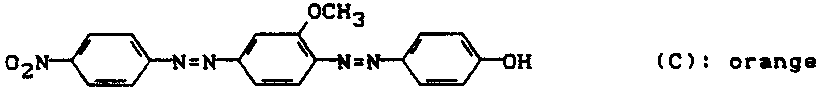

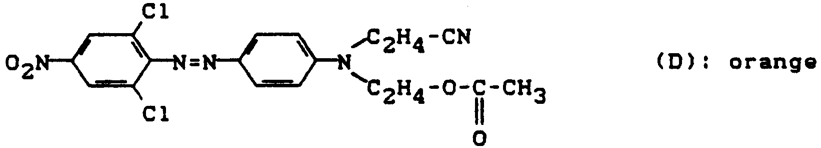

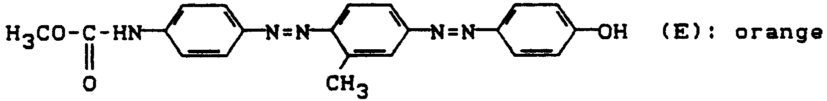

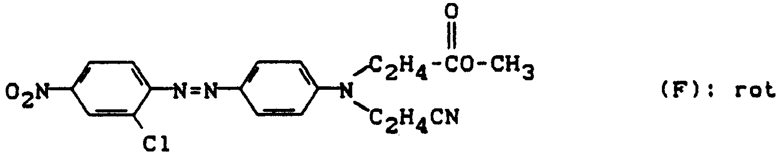

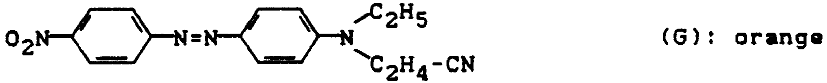

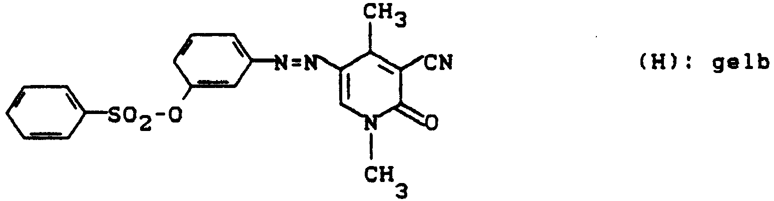

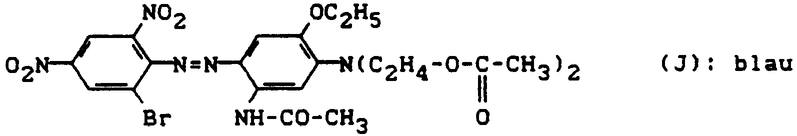

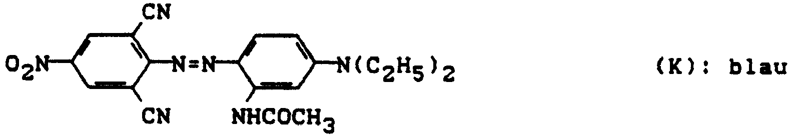

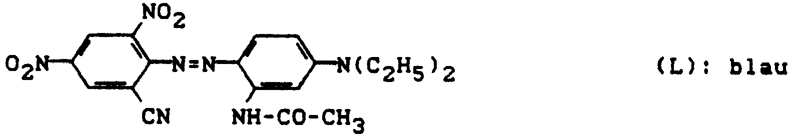

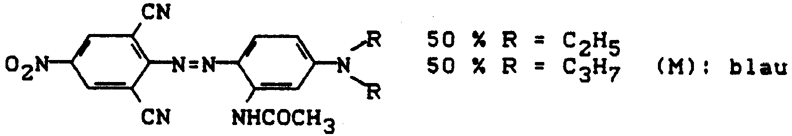

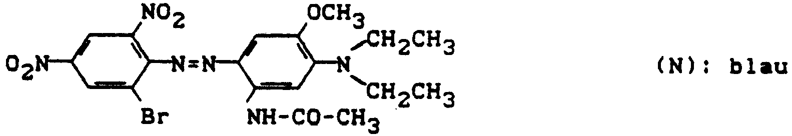

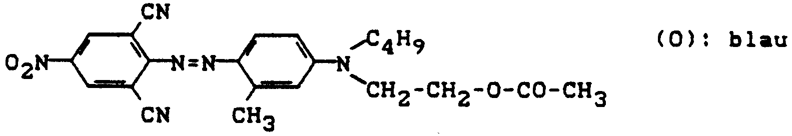

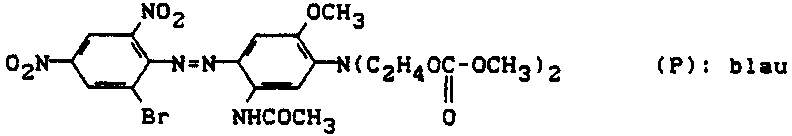

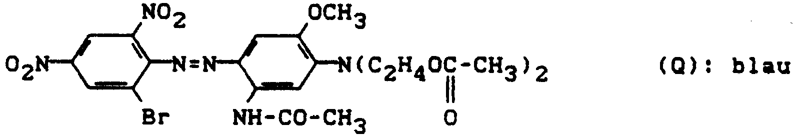

Die obengenannten Mischungen enthalten mindestens einen der erfindungsgemäßen Farbstoffe, mindestens einen Blaufarbstoff und gegebenenfalls einen oder mehrere Farbstoffe aus der Gelb- bis Rotreihe, sowie eventuell auch Nuancierungsfarbstoffe.

Bevorzugte Mischungen sind solche, die je 10 bis 60 Gew.-% eines Farbstoffs der Formel I enthalten. Besonders bevorzugte Blau- und Schwarzmischungen enthalten 15 bis 50, insbesondere 20 bis 45 Gew.-% des Farbstoffs I.

Ein besonders geeigneter Farbstoff der Formel (I) entspricht der Formel

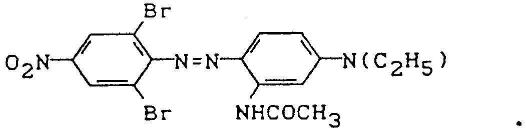

Geeignete Nuancierungsfarbstoffe sind handelsübliche Dispersionsfarbstoffe, wie sie z.B. in der oben aufgeführten Formelliste genannt sind.

Die in den nachfolgenden Beispielen angegebenen Prozentzahlen beziehen sich auf das Warengewicht.

### Beispiel 1

Ein Polyestergewebe wird bei 40-50 ° C und einem Flottenverhältnis von 1:20 in ein Färbebad eingebracht, das 0,6 % des Farbstoffs der Formel I, worin R₁ = C₄H₉-n, X₁ = X₂ = Br, R₂ = CH₂CH₂OCOCH₃ und R₃ = CH₃ bedeuten, in fein verteilter und durch Dispergiermittelzusatz stabilisierter Form enthält.

Bei pH 4-5 wird langsam erwärmt und ca. 60 Minuten unter Druck bei 130 ° C gefärbt. Nach dem Spülen, Seifen, Spülen und Trocknen erhält man eine kräftige gelbbraune Färbung.

### Beispiel 2

Ein Polyestergewebe wird in ein Färbebad eingebracht, das 1,2 % des Farbstoffes gemäß Beispiel 1 und 0,98 % des blauen Farbstoffes P enthält. Man färbt wie in Beispiel 1 angegeben und erhält eine satte Schwarzfärbung.

### Beispiel 3

Ein Polyestergewebe wird in ein Färbebad eingebracht, das 1,18 % des Farbstoffes gemäß Beispiel 1 und 0,99 % des blauen Farbstoffes Q enthält. Man färbt wie in Beispiel 1 angegeben und erhält eine satte Schwarzfärbung.

## Claims

1. Process for dyeing and printing synthetic fibre materials, **characterized in that** dyestuffs of the formula 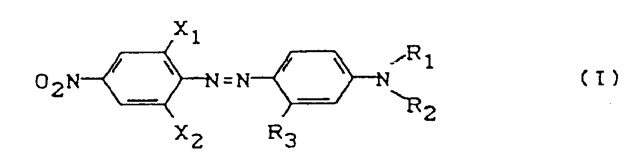
where - independently of one another -
X₁ and X₂ denote Cl or Br,
R₁ denotes C₁-C₄-alkyl,
R₂ denotes C₁-C₄-alkyl, phenyl-C₁-C₃-alkyl or -CH₂CH₂OCOC₁-C₄-alkyl,
and
R₃ denotes NHCO-C₁-C₄-alkyl or methyl,
with the proviso that
R₂ denotes CH₂CH₂OCOC₁-C₄-alkyl, when
R₃ denotes methyl,
are used.

2. Process according to Claim 1, **characterized in that** the dyestuff of the formula 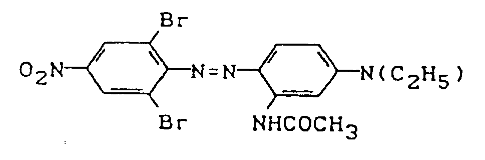 is used.

3. Process according to Claim 1, **characterized in that** the dyestuff of the formula 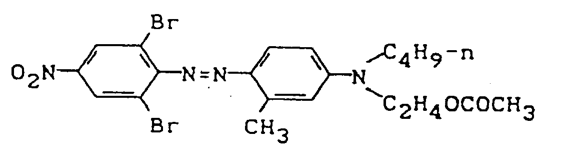 is used.

4. Dyestuff mixtures for navy and black dyeings, containing 10 to 60% by weight of a dyestuff of the formula I defined as in Claim 1.

5. Dyestuff mixtures for navy and black dyeings according to Claim 4, **characterized in that** they additionally contain the dyestuff of the formula 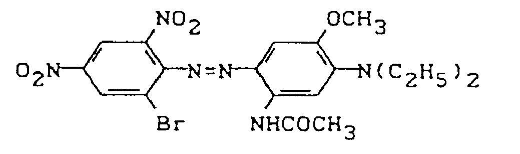 and optionally also shading dyestuffs.

## Patentansprüche

1. Verfahren zum Färben und Bedrucken von synthetischen Fasermaterialien, **dadurch gekennzeichnet, daß** man Farbstoffe der Formel 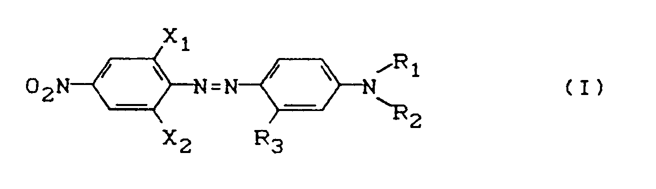
verwendet,
worin - unabhängig voneinander -
X₁ / X₂ = Cl oder Br,
R₁ = C₁-C₄-Alkyl,
R₂ = C₁-C₄-Alkyl, Phenyl-C₁-C₃-alkyl oder -CH₂CH₂OCOC₁-C₄-Alkyl,
und
R₃ = NHCO-C₁-C₄-Alkyl oder Methyl bedeuten,
mit der Maßgabe, daß
R₂ = CH₂CH₂OCOC₁-C₄-Alkyl, wenn
R₃ = Methyl.

2. Verfahren nach Anspruch 1, **dadurch gekennzeichnet, daß** man den Farbstoff der Formel 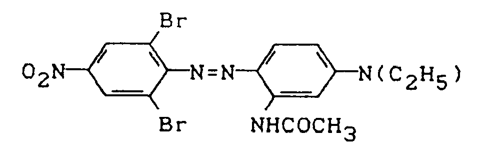 verwendet.

3. Verfahren nach Anspruch 1, **dadurch gekennzeichnet, daß** man den Farbstoff der Formel 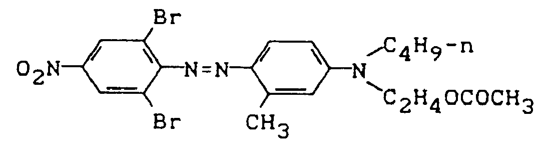 verwendet.

4. Farbstoffmischungen für Marineblau- und Schwarzfärbungen, enthaltend 10 bis 60 Gew.- % eines Farbstoffs der Formel I mit den in Anspruch 1 angegebenen Bedeutungen.

5. Farbstoffmischungen für Marineblau- und Schwarzfärbungen gemäß Anspruch 4, **dadurch gekennzeichnet, daß** sie zusätzlich den Farbstoff der Formel 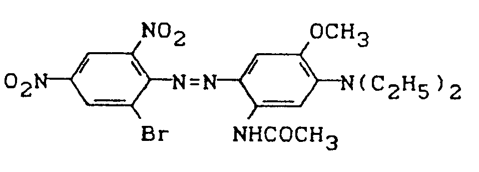 sowie gegebenenfalls Nuancierungsfarbstoffe enthalten.

## Revendications

1. Procédé pour la teinture et l'impression de matières fibreuses synthétiques, **caractérisé en ce que** l'on utilise des colorants de formule : 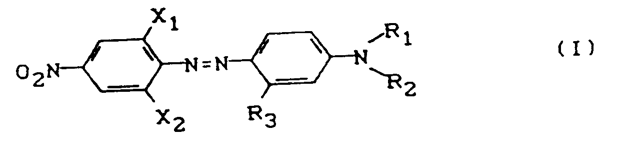 dans laquelle -indépendamment les uns des autres -
X₁/X₂ = Cl ou Br,
R₁ = alkyle en C₁-C₄,
R₂ = alkyle en C₁-C₄, phényl-alkyle en C₁-C₃ ou -CH₂CH₂OCO-alkyleen C₁-C₄ et
R₃ = HNCO-alkyle en C₁-C₄ ou méthyle,
sous réserve que,
lorsque R₃ = méthyle,
R₂ = CH₂ CH₂ OCO-alkyle en C₁-C₄.

2. Procédé selon revendication 1, **caractérisé en ce que** l'on utilise le colorant de formule :

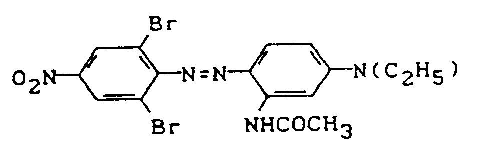

3. Procédé selon revendication 1, **caractérisé en ce que** l'on utilise le colorant de formule

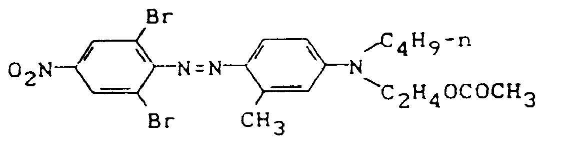

4. Mélanges de colorants pour teintures en bleu marine et noir, contenant 10 à 60 % en poids d'un colorant de formule I dans laquelle les symboles ont les significations indiquées dans la revendication 1.

5. Mélanges de colorants pour teintures en bleu marine et noir selon la revendication 4, **caractérisés en ce qu'**ils contiennent en outre le colorant de formule : 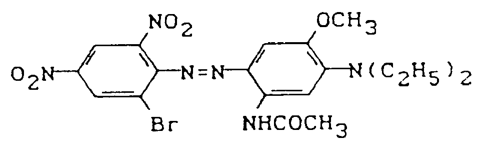 et le cas échéant des colorants nuanceurs.
